# EUROPEAN PATENT SPECIFICATION

(11) **EP 3 885 612 B1**
(45) Date of publication and mention of the grant of the patent: **18.11.2026**
(21) Application number: 21160313.9
(22) Date of filing: 02.03.2021
(51) Int. Cl.: F16H 55/22, F16H 1/16

(54) **GLOBOID WORM GEAR**
GLOBOIDSCHNECKENRAD
ROUE À VIS SANS FIN GLOBIQUE

(30) Priority: 26.03.2020 EP 20165830
(43) Date of publication of application: 29.09.2021
(73) Proprietor: Illinois Tool Works, Inc., Glenview, Illinois 60025 (US)
(72) Inventor: MARTIN, Lionel, Illinois, 60025 (US); RICHARD, Didier, Illinois, 60025 (US)
(74) Representative: HGF

(56) References cited:
- DE-A1- 102011 050 261
- DE-A1- 102012 023 462
- DE-A1- 102014 104 284
- DE-A1- 102016 222 115
- DE-B- 1 027 032
- JP-A- 2008 055 649
- US-A- 2 448 187

## Description

### Technical Field of Invention

The invention relates to a globoid worm gear for engagement with a worm in a worm gear assembly, to a gear assembly including a globoid worm gear and a worm, and to a method of assembling the worm gear assembly.

### Background

A globoid worm gear assembly includes a worm and a globoid worm gear that is rotated by the worm. The worm includes one or more helical gear teeth that engage gear teeth of the globoid worm gear to transfer rotation. The worm and the globoid worm gear rotate about perpendicular axes of rotation. An example of a known worm gear system is disclosed in DE102016222115A1. Another example of a known worm gear system is disclosed in DE1027032B.

A globoid worm gear is shaped to increase the surface area of its gear teeth compared to a conventional worm gear. This provides for decreased contact pressure and an increased number of gear teeth in engagement, which reduces gear wear and increases transmissible torque.

Assembly of such a globoid worm gear assembly is limited because it is not possible for the worm to be assembled on a housing before the globoid worm gear, and for the globoid worm gear to be engaged with the worm by moving it in an axial direction into the housing due to interference between the worm and the globoid worm gear.

### Summary

According to the present invention, there is provided a globoid worm gear for engagement with a worm in a worm gear assembly. The globoid worm gear comprises a first and a second side surface, a circumferential surface, and an axis of rotation. The globoid worm gear also comprises a plurality of gear teeth spaced about the circumferential surface with spaces arranged between adjacent gear teeth, the plurality of gear teeth being for engaging the worm. The plurality of gear teeth comprise spaces between adjacent gear teeth that open into the first side surface. Such a globoid worm gear may be termed an open or semi-open globoid worm gear. According to the invention, the front end of the plurality of gear teeth at the first side surface each comprise a chamfer that tapers towards the first side surface, and the circumferential surface comprises at each of the edges of the spaces at the first side surface a chamfer that tapers towards the first side surface of the globoid worm gear.

Particular embodiments of the invention are laid down in the dependent claims.

According to a particular embodiment of the invention, there is provided a worm gear assembly comprising the globoid worm gear described above, a worm, and a housing comprising a recess receiving the globoid worm gear. The worm has a second axis of rotation perpendicular to the first axis of rotation.

The globoid worm gear and the worm are mounted to the housing for rotation about perpendicular axes of rotation and such that the worm engages the gear teeth of the globoid worm gear.

There is also provided a method of assembling the worm gear assembly. The method comprises mounting the worm to the housing and then mounting the globoid worm gear to the housing by inserting the globoid worm gear into the recess in an axial direction of the globoid worm gear. In particular, the method comprises inserting an open or semi-open globoid worm gear into the recess in an axial direction of the globoid worm gear.

### Brief Description of Drawings

Example embodiment(s) of the invention are illustrated in the accompanying drawings, in which:
**Figure 1** illustrates a perspective view of a worm gear assembly;
**Figure 2** illustrates perspective view the worm gear assembly of Figure 1 being assembled;
**Figure 3a** illustrates a globoid worm of the worm gear assembly of Figure 1;
**Figure 3b** **illustrates a conventional worm of the worm gear assembly of** **Figure 1****;**
**Figure 4** illustrates a first example globoid worm gear of the worm gear assembly of Figure 1;
**Figure 5** illustrates a second example globoid worm gear of the worm gear assembly of Figure 1;
**Figure 6** illustrates a globoid worm gear according to the claimed invention;
**Figure 7** illustrates a fourth example globoid worm gear of the worm gear assembly of Figure 1;
**Figure 8** illustrates an example globoid worm gear of the worm gear assembly of Figure 1, showing contact surfaces with the globoid worm;
**Figure 9** illustrates the gear tooth shear stress distribution of an example globoid worm gear of the worm gear assembly of Figure 1; and
**Figure 10** illustrates the gear tooth shear stress distribution of another example globoid worm gear of the worm gear assembly of Figure 1.

### Description

The illustrated example embodiments relate to a globoid worm gear for engagement with a worm in a worm gear assembly.

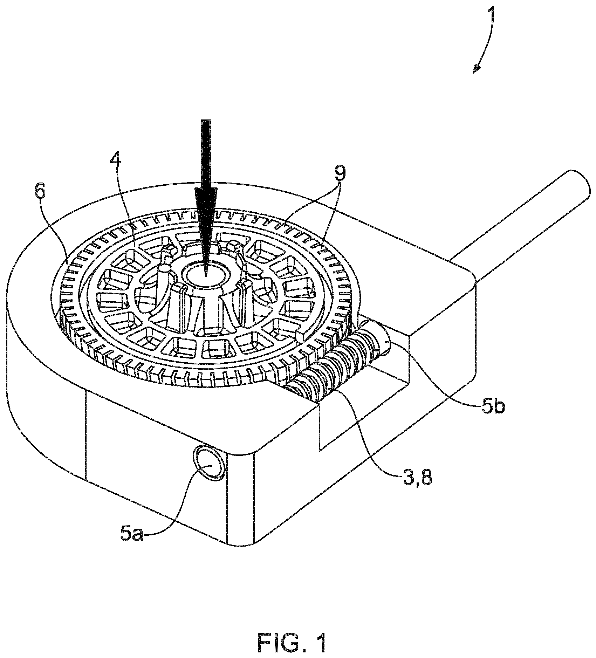

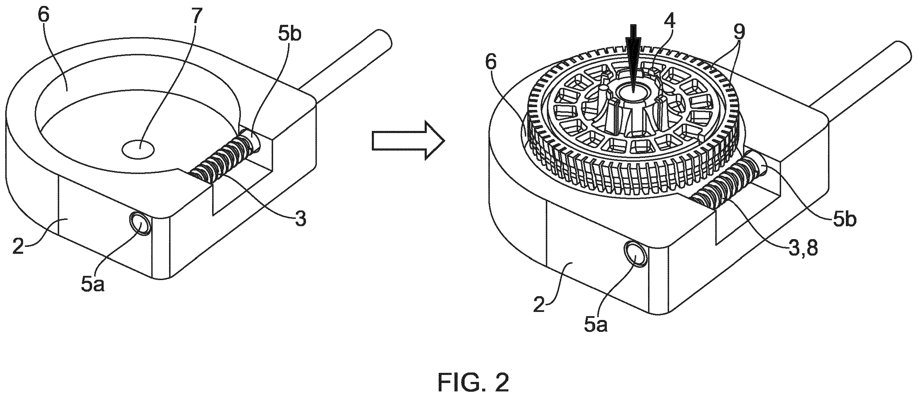

The worm gear assembly 1 shown in Figure 1 includes a housing 2, a worm 3, and a globoid worm gear 4. The housing 2 includes a recess 6 in which the globoid worm gear 4 is seated. The housing 2 also includes a mount (7, see Figure 2) to which the globoid worm gear 4 is rotationally mounted, for example a hole as illustrated, or alternatively a shaft. The housing 2 also includes mount portions 5a, 5b for rotationally mounting the worm 3 such that the worm 3 extends across one side of the recess 6. In the assembled state shown in Figure 1, the worm 3 engages the globoid worm gear 4. Rotation of the worm 3 thereby drives rotation of the globoid worm gear 4. An axis of rotation of the worm 3 is perpendicular to an axis of rotation of the globoid worm gear 4.

The worm 3 includes one or more helical gear teeth 8 on a circumferential surface. The globoid worm gear 4 includes a plurality of gear teeth 9 arranged to engage the helical gear teeth 8 of the worm 3. In particular, as shown in Figure 1, the mount (7, see Figure 2) for the globoid worm gear 4 and the mount portions 5a, 5b for the worm 3 are arranged such that the worm 3 engages the globoid worm gear 4 such that rotation of the worm 3 drives rotation of the globoid worm gear 4.

As shown in Figure 2, in a preferred method of assembling the worm gear assembly 1 the worm 3 is mounted to the housing 2, in particular via mount portions 5a, 5b, and then the globoid worm gear 4 is attached to the housing 2, in particular at the mount 7, by inserting the globoid worm gear 4 into the recess 6 in an axial direction of the globoid worm gear 4. The globoid worm gear 4 may be pressed into the recess 6.

As shown, the recess 6 is preferably configured to closely surround the circumferential face of the globoid worm gear 4 with only a small spacing between the surface of the recess 6 and the gear teeth 9 of the globoid worm gear 4. In particular, the recess 6 is cylindrical with an opening at one end to accommodate the worm 3.

In alternative examples, the worm 3 may be rotationally mounted to the housing 2 at a single mount point, for example mount point 5a. The globoid worm gear 4 may comprise a spigot or shaft to engage the mount 7 in the form of a hole, as illustrated, or the mount 7 of the housing 2 may include a shaft or spigot for mounting the globoid worm gear 4. The housing 2 may comprise two parts that are assembled with the worm 3 in between to facilitate assembly of the housing 2 and the worm 3.

The worm gear assembly 1 may include one or more bearings or bushings for the worm 3 and/or the globoid worm gear 4. Alternatively, the housing 2 and/or the worm 3 and/or a shaft or spigot of the globoid worm gear 4 may comprise a low friction or self-lubricating material, for example a polyamide such as Nylon, or a polyoxymethylene. In some examples, the globoid worm gear 4 may be made of a self-lubricating material, for example a polyamide such as Nylon, or a polyoxymethylene.

In a final configuration the globoid worm gear 4 is coupled to a further component, not illustrated, such that the further component is rotated by the globoid worm gear 4 when the worm 3 is rotated. For example, the globoid worm gear 4 may be coupled to a windscreen wiper for actuating the windscreen wiper, or to a window lift system for opening and closing a window. Accordingly, the worm gear assembly 1 may be an automotive worm gear assembly.

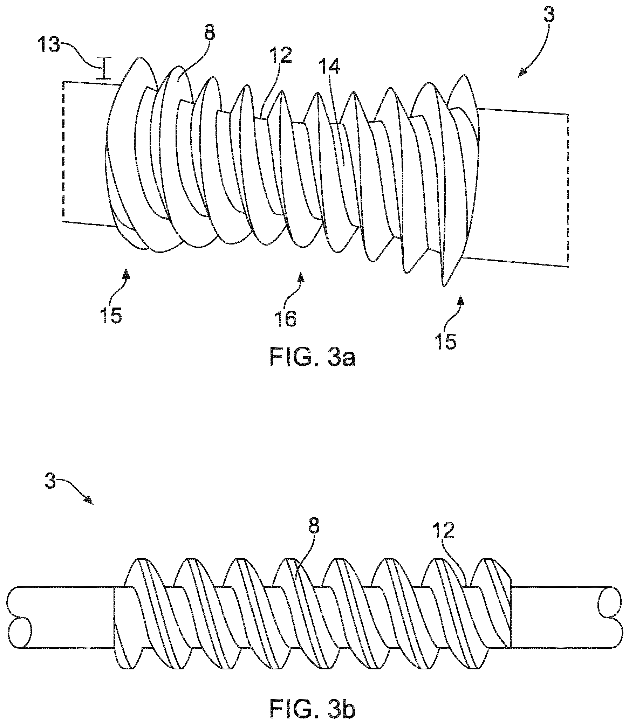

Figure 3a shows a first example of the worm 3 of the worm gear assembly 1. In this example, the worm 3 is a globoid worm 3. The globoid worm 3 comprises one or more helical gear teeth 8 on a circumferential surface 12 of the globoid worm 3, for example one, two or three helical gear teeth 8. In contrast to a conventional worm (see Figure 3b), a depth of the helical gear teeth 8 of the globoid worm 3 varies along the length of the globoid worm 3. In particular, the depth 13 of the helical gear teeth 8 is greater at the ends 15 of the helical gear teeth 8 than in the centre 16. In this way, the helical gear teeth 8 conform to the circumference of the globoid worm gear 4 to increase contact surface area between the helical gear teeth 8 and the gear teeth 9 of the globoid worm gear 4. Additionally, the diameter of the shaft 14 of the globoid worm 3, from which the helical gear teeth 8 protrude, may be reduced in the centre 16 in the same manner, as illustrated.

Figure 3b shows an alternative example of the worm 3 of the worm gear assembly 1. In this example, the worm 3 is a conventional worm 3. The conventional worm 3 comprises one or more helical gear teeth 8 on a circumferential surface 12 of the conventional worm 3, for example one, two or three helical gear teeth 8. In contrast to the globoid worm (see Figure 3a), a depth of the helical gear teeth 8 of the conventional worm 3 remains constant along the length of the conventional worm 3.

It will be appreciated that either a globoid worm 3 (see Figure 3a) or a conventional worm 3 (see Figure 3b) may be used in the worm gear assembly 1 illustrated in Figure 1. Preferably, the worm 3 is a conventional worm 3, as illustrated in Figure 3b, as a conventional worm 3 is easier to manufacture and less expensive than a globoid worm, as illustrated in Figure 3a.

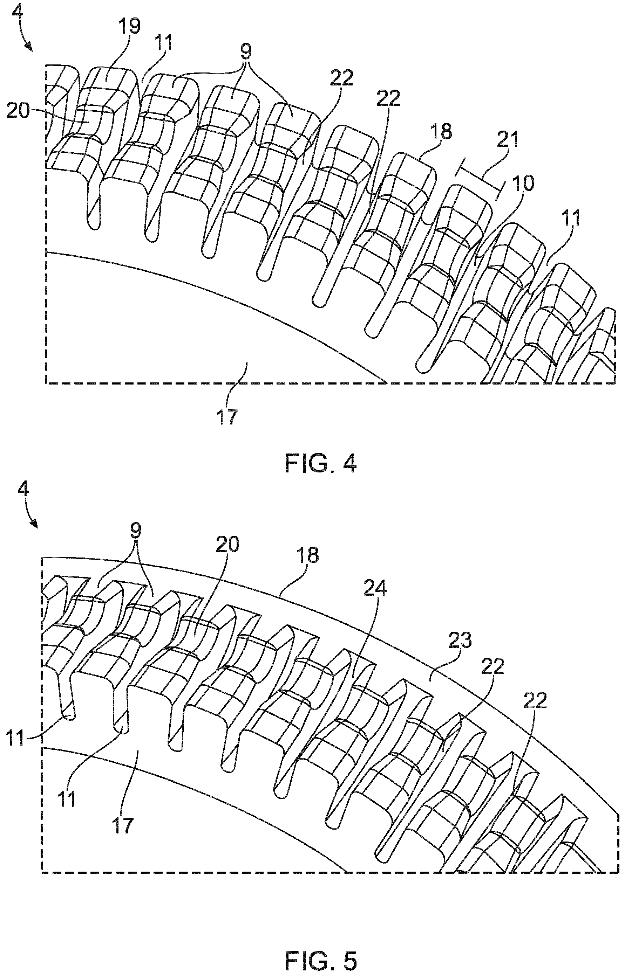

Figures 4 to 7 illustrate different examples of the globoid worm gear 4 for the worm gear assembly 1 described above. In each of the examples of Figures 4 to 7, the globoid worm gear 4 comprises first and second surfaces 17, 18, in particular a front surface 17 and a back surface 18. The globoid worm gear 4 also includes a circumferential surface 10 that extends between the first and second surfaces 17, 18. The globoid worm gear 4 comprises a plurality of gear teeth 9 spaced about the circumferential surface 10 of the globoid worm gear 4. Spaces 11 are arranged between the gear teeth 9.

In the example of Figure 4, each space 11 extends to both the front and back surfaces 17, 18 of the globoid worm gear 4 such that the spaces 11 open into the front and back surfaces 17, 18. This allows the globoid worm gear 4 to be engaged with the worm 3 by moving the globoid worm gear 4 in an axial direction, as illustrated in Figure 2. In particular, as the spaces 11 open into the front and back surfaces 17, 18, the helical gear tooth 8 of the worm 3 can enter the spaces 11 between the gear teeth 9 as the globoid worm gear 4 is moved axially.

A further advantage of the spaces 11 opening into the front and back surfaces 17, 18 is that the globoid worm gear 4 can be more simply moulded, in particular injection moulded, because fewer sliding cores are required to form the gear teeth 9 about the circumferential surface 10.

As also illustrated in Figure 4, each gear tooth 9 has a top surface 19 that includes a recess 20. The recesses 20 are arranged centrally in the gear teeth 9 and configured to align with, and accommodate, the shaft 14 of the worm 3 (see Figures 3a and 3b). This allows a closer spacing between the worm 3 and the globoid worm gear 4, increasing the contact surface area between the helical gear tooth 8 of the worm 3 and the gear teeth 9 of the globoid worm gear 4.

As also illustrated in Figure 4, preferably a tooth width 21 of each gear tooth 9 (i.e. the thickness of the tooth 9 in a circumferential direction) is thinner in the centre than towards the opposing surfaces 17, 18 of the globoid worm gear 4. In particular, the side surfaces 22 of each gear tooth 9 are concave. Such a configuration improves contact surface area between the helical gear tooth 8 of the worm 3 and the gear teeth 9 of the globoid worm gear 4.

In the example of Figure 5 the globoid worm gear 4 includes a flange 23 on the back face 18. The flange 23 may be an integrally moulded part of the globoid worm gear 4, or attached to the globoid worm gear 4. As such, the spaces 11 between the gear teeth 9 do not open onto the back face 18 of the globoid worm gear 4. The spaces 11 between the gear teeth 9 do open onto the front face 17 of the globoid worm gear 4, allowing axial assembly of the globoid worm gear 4 into the housing 2 via the front face 17, as described with reference to Figure 2.

In the example of Figure 5, where the spaces 11 are closed by the flange 23 on one side, the globoid worm gear 4 is a semi-globoid worm gear.

As illustrated in Figure 5, the root surfaces 24 in the spaces 11 between gear teeth 9 are curved upwards (i.e. curved in a radially outward direction) towards the flange 23. The flange 23 and the curved root surfaces 24 increase the strength of the gear teeth 9.

In the example of Figure 5 the gear teeth 9 have the recesses 20 and concave side surfaces 22 described with reference to Figure 4. However, it will be appreciated that each of these features is optional in combination with the flange 23 and curved root surfaces 24.

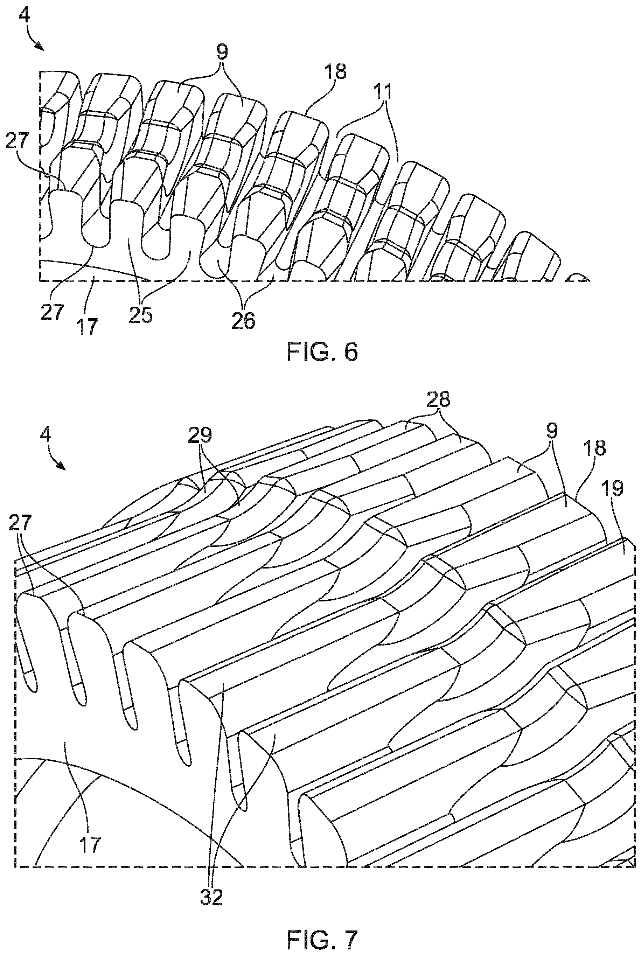

In the example of Figure 6, a front edge 27 of the globoid worm gear 4 has a chamfer 26. In particular, a front end 25 of each gear tooth 9 comprise a chamfer 26 that tapers towards the front surface 17 of the globoid worm gear 4. Additionally or alternatively, the edges of the spaces 11 at the front surface 17 each comprise a chamfer 26 that tapers towards the front surface 17 of the globoid worm gear 4. The chamfer 26 makes it easier for the globoid worm gear 4 to engage the worm 3 during assembly of the gear assembly 1 as illustrated in Figure 2. In particular, the chamfer 26 guides the helical gear tooth 8 of the worm 3 into the spaces 11 between the gear teeth 9, and may additionally cause deformation of the gear teeth 9 as the globoid worm gear 4 is pressed into the housing 2 as shown in Figure 2, to allow the helical gear tooth 8 to enter the space 11.

Preferably, the gear teeth 9 (in particular the side surfaces 22), spaces 11, and front edge 27 of the globoid worm gear 4 are configured such that the helical gear tooth 8 of the worm 3 must be pressed into the spaces 11 to overcome interference between the helical gear tooth 9 and the gear teeth 9 before clicking into the spaces between the concave side surfaces 22 of the gear teeth 9. In this way, the gear assembly 1 of Figure 1 can be assembled by pressing the globoid worm gear 4 into the housing 2 to engage the worm 3, and the interference prevents the globoid worm gear 4 from falling out of position during further assembly operations, which may include inverting the gear assembly 1 illustrated in Figure 1. The interference also provides for a close fit between the gear teeth 9 of the globoid worm gear 4 and the helical gear tooth 8 of the worm 3, reducing backlash and increasing contact surface area during use.

In the example of Figure 6 the gear teeth 9 have the recesses 20 and concave side surfaces 22 described with reference to Figure 4. However, it will be appreciated that each of these features is optional in combination with the chamfer 26. In addition, the globoid worm gear 4 described with refence to Figure 5 may additionally include the chamfer 26 illustrated in Figure 6.

In the example of Figure 7, the top surface 19 each gear tooth 9 comprises a first portion 32 adjacent the front face 17 and a second portion 28 adjacent the back face 18. The second portion 28 has a greater diameter than the first portion 32, resulting in a step, or preferably a ramp 29, between the first and second portions 32, 28.

The lower diameter of the first portions 32 permits axial assembly of the globoid worm gear 4 with the worm 3 and housing 2 in the manner described with reference to Figure 2. In particular, the lower diameter of the first portion 32 reduces or eliminates interference between the helical gear tooth 8 of the worm 3 and the gear teeth 9 of the globoid worm gear 4 that might otherwise prevent the helical gear tooth 8 entering the spaces 11 to engage, and also allows the shaft 14 of the worm 3 to move into position. The second portions 28 provide greater contact surface area between the helical gear tooth 8 of the worm 3 and the gear teeth 9 of the globoid worm gear 4. This increases contact surface area and improves torque transmission, and also increases the rigidity of the gear teeth 9.

In some examples, the first portions 32 may be at the diameter of the recesses 20 described with reference to Figure 4 so that there is no need for the recesses 20. In such an example, the globoid worm gear 4 is a semi-globoid worm gear. Alternatively, the gear teeth 9 of the example of Figure 7 may additionally include recesses 20 such as those described with reference to Figure 4.

In the example of Figure 7 the gear teeth 9 may optionally include the concave side surfaces 22 described with reference to Figure 4. Additionally or alternatively, the globoid worm gear 4 may include a flange 23 and/or curved root surface 24 as described with reference to Figure 5, and/or the chamfer 26 described with reference to Figure 6.

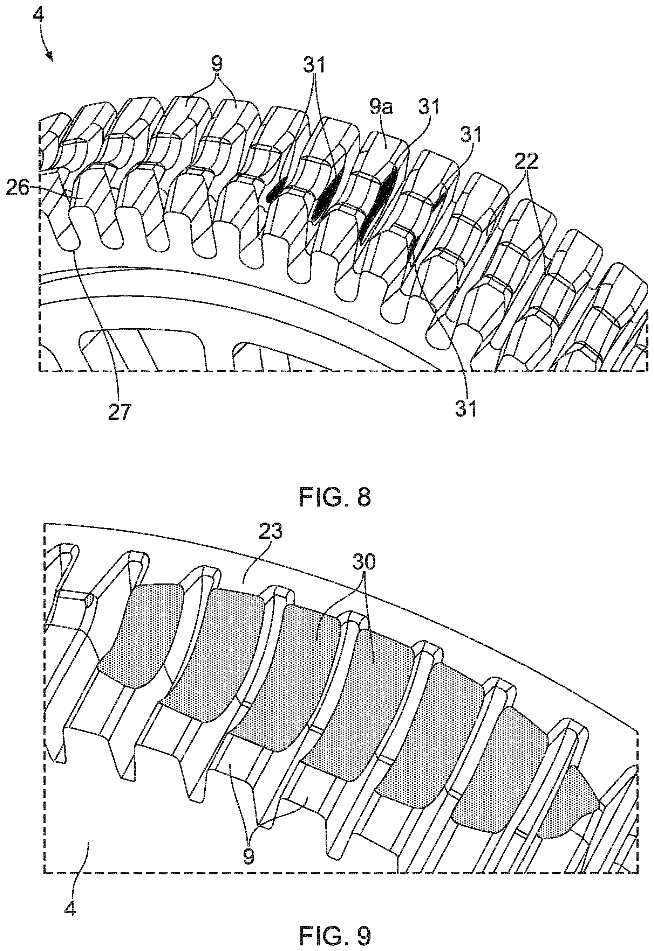

Figure 8 illustrates an example globoid worm gear 4 and indicates the contact points of the helical gear tooth 8 of the worm 3 of the gear assembly illustrated in Figure 1. As shown, the globoid worm gear 4 includes gear teeth 9 that include concave side surfaces 22 and a chamfer 26 on the front edge 27, as described with reference to Figures 4 and 6.

As shown in Figure 8, the concave side surfaces 22 are engaged by the helical gear tooth 8 across the concave parts of the side surfaces 22. Regions 31 of the gear teeth 9, as illustrated in Figure 8, are engaged by the helical gear tooth 8 of the worm 3.

In this example, four gear teeth 9 are engaged simultaneously, and at maximum engagement (gear tooth 9a as indicated) approximately the entire concave part of the side surface 22 is engaged. Therefore, the concave side surfaces 22 of the gear teeth 9 increase contact surface area between the helical gear tooth 8 of the worm 3 and the gear teeth 9 of the globoid worm gear 4, which improves torque transfer.

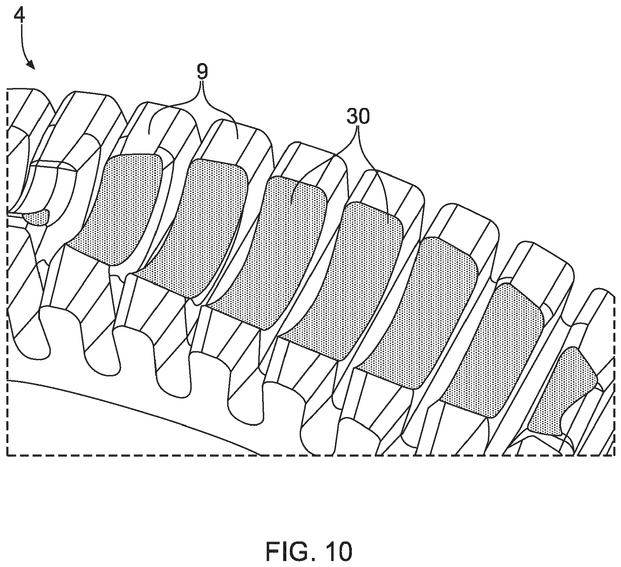

Figure 9 illustrates the gear teeth section subjected to shear stress 30 in the gear teeth 9 of the globoid worm gear 4 of Figure 5. Figure 10 illustrates the gear teeth section subjected to shear stress 30 in the gear teeth 9 of the globoid worm gear 4 of Figure 6.

As illustrated, the shear stress is distributed over a larger surface area 30 in the globoid worm gear 4 of Figure 6 than for the semi-globoid worm gear 4 of Figure 5. The surface area 30 over which the shear force is distributed in increased, reducing the maximum shear stress on each gear tooth 9 and prolonging the life of the globoid worm gear 4.

Preferably, the gear teeth 9 of the globoid worm gear 4 are helical, although the helix angle is very low.

In summary, there is provided a globoid worm gear 4 for engagement with a globoid worm 3 in a worm gear assembly 1. The globoid worm gear 4 has first and second side surfaces 17, 18, a circumferential surface 10, and an axis of rotation. The globoid worm gear 4 also includes a plurality of gear teeth 9 spaced about the circumferential surface 10 with spaces 11 arranged between adjacent gear teeth 9. The plurality of gear teeth 9 are configured to engage the globoid worm 3. The plurality of gear teeth 9 are configured such that the spaces 11 between adjacent gear teeth 9 open into the first side surface 17.

There is also provided a worm gear assembly that includes the globoid worm gear 4. The worm gear assembly 1 includes a housing 2, a globoid worm 3, and the globoid worm gear 4. The globoid worm gear 4 and the globoid worm 3 are mounted to the housing 2 for rotation about perpendicular axes of rotation and such that the globoid worm 3 engages the gear teeth 9 of the globoid worm gear 4.

There is also provided a method of assembling the worm gear assembly 1 described above. The method includes first mounting the worm 3 to the housing 2 and then mounting the globoid worm gear 4 to the housing 2 by inserting the globoid worm gear 4 into the recess 6 in an axial direction of the globoid worm gear 4. As the globoid worm gear 4 is inserted into the housing 2 the gear teeth 9 of the globoid worm gear 4 engage the gear tooth or teeth of the worm 3.

## Claims

1. A globoid worm gear (4) for engagement with a worm (3) in a worm gear assembly (1), the globoid worm gear (4) comprising:
a first side surface (17) and a second side surface (18), a circumferential surface (10), and a first axis of rotation; and
a plurality of gear teeth (9) spaced about the circumferential surface (10) with spaces (11) arranged between adjacent gear teeth (9), the plurality of gear teeth (9) being for engaging the worm (3);
wherein the plurality of gear teeth (9) comprise spaces (11) between adjacent gear teeth (9) that open into the first side surface (17),
wherein the front end (25) of the plurality of gear teeth (9) at the first side surface (17) each comprise a chamfer (26) that tapers towards the first side surface (17),
**characterised in that** the circumferential surface (10) comprises at each of the edges of the spaces (11) at the first side surface (17) a chamfer (26) that tapers towards the first side surface (17) of the globoid worm gear (4).

2. The globoid worm gear (4) of claim 1, wherein each of the plurality of gear teeth (9) comprises concave side surfaces (22) for engaging the worm (3).

3. The globoid worm gear (4) of claim 1 or claim 2, wherein the spaces (11) between adjacent gear teeth (9) extend the second side surface (18).

4. The globoid worm gear (4) of claim 1 or claim 2, wherein the spaces (11) between adjacent gear teeth (9) extend to only the first side surface (17), the second side surface (18) comprising a flange (23) that closes the ends of the spaces (11) between adjacent gear teeth (9).

5. The globoid worm gear (4) of claim 4, wherein a root surface (24) is arranged between each adjacent tooth (9), the root surface (24) being curved in a radially outward direction of the globoid worm gear (4) towards the flange (23).

6. The globoid worm gear (4) of claim 4 or claim 5, wherein each of the plurality of gear teeth (9) comprises a top surface (19), wherein each top surface (19) comprises a first portion (32) adjacent to the first side surface (17) and a second portion (28) adjacent to the second side surface (18), and wherein a radius of the second portion (28) from the first axis of rotation is greater than a radius of the first portion (32) from the first axis of rotation.

7. The globoid worm gear (4) of any one of claims 1 to 3, wherein each gear tooth (9) has a top surface (19) that includes a recess (20) and wherein the recesses (20) are arranged centrally in the gear teeth (9) and configured to align with, and accommodate, a shaft (14) of the worm (3).

8. A worm gear assembly (1) comprising the globoid worm gear (4) of any of claims 1 to 7, a worm (3), and a housing (2) comprising a recess (6) receiving the globoid worm gear (4), wherein the worm has a second axis of rotation perpendicular to the first axis of rotation, and wherein the globoid worm gear (4) and the worm (3) are mounted to the housing (2) for rotation about perpendicular axes of rotation and such that the worm (3) engages gear teeth (9) of the globoid worm gear (4).

9. A method of assembling the worm gear assembly (1) of claim 8, comprising mounting the worm (3) to the housing (2) to mount the axes of rotation perpendicularly, and then mounting the globoid worm gear (4) to the housing (2) by inserting the globoid worm gear (4) into the recess (6) in an axial direction of the globoid worm gear (4).

## Patentansprüche

1. Globoid-Schneckenrad (4) zum Eingriff mit einer Schnecke (3) in einer Schneckenradanordnung (1), wobei das Globoid-Schneckenrad (4) Folgendes aufweist:
eine erste Seitenfläche (17) und eine zweite Seitenfläche (18), eine Umfangsfläche (10) und eine erste Drehachse; und
eine Mehrzahl von Zahnradzähnen (9), die beabstandet um die Umfangsfläche (10) angeordnet sind, wobei zwischen angrenzenden Zahnradzähnen (9) Zwischenräume (11) angeordnet sind, wobei die Mehrzahl von Zahnradzähnen (9) zum Eingriff mit der Schnecke (3) dient;
wobei die Mehrzahl von Zahnradzähnen (9) Zwischenräume (11) zwischen angrenzenden Zahnradzähnen (9) aufweist, die sich in die erste Seitenfläche (17) öffnen,
wobei das vordere Ende (25) der Mehrzahl von Zahnradzähnen (9) an der ersten Seitenfläche (17) jeweils eine Abschrägung (26) aufweist, die sich zu der ersten Seitenfläche (17) hin verjüngt,
**dadurch gekennzeichnet, dass** die Umfangsfläche (10) an jeder der Kanten der Zwischenräume (11) an der ersten Seitenfläche (17)
eine Abschrägung (26) aufweist, die sich zur ersten Seitenfläche (17) des Globoid-Schneckenrads (4) hin verjüngt.

2. Globoid-Schneckenrad (4) nach Anspruch 1, wobei jeder der Mehrzahl von Zahnradzähnen (9) konkave Seitenflächen (22) zum Eingriff mit der Schnecke (3) aufweist.

3. Globoid-Schneckenrad (4) nach Anspruch 1 oder Anspruch 2, wobei sich die Zwischenräume (11) zwischen angrenzenden Zahnradzähnen (9) über die zweite Seitenfläche (18) erstrecken.

4. Globoid-Schneckenrad (4) nach Anspruch 1 oder Anspruch 2, wobei sich die Zwischenräume (11) zwischen angrenzenden Zahnradzähnen (9) nur zu der ersten Seitenfläche (17) erstrecken, wobei die zweite Seitenfläche (18) einen Flansch (23) aufweist, der die Enden der Zwischenräume (11) zwischen angrenzenden Zahnradzähnen (9) schließt.

5. Globoid-Schneckenrad (4) nach Anspruch 4, wobei eine Fußfläche (24) zwischen jedem angrenzenden Zahn (9) angeordnet ist, wobei die Fußfläche (24) in einer radial nach außen gerichteten Richtung des Globoid-Schneckenrads (4) zu dem Flansch (23) hin gekrümmt ist.

6. Globoid-Schneckenrad (4) nach Anspruch 4 oder Anspruch 5, wobei jeder der Mehrzahl von Zahnradzähnen (9) eine obere Fläche (19) aufweist, wobei jede obere Fläche (19) einen ersten Abschnitt (32) angrenzend an die erste Seitenfläche (17) und einen zweiten Abschnitt (28) angrenzend an die zweite Seitenfläche (18) aufweist, und wobei ein Radius des zweiten Abschnitts (28) von der ersten Drehachse größer ist als ein Radius des ersten Abschnitts (32) von der ersten Drehachse.

7. Globoid-Schneckenrad (4) nach einem der Ansprüche 1 bis 3, wobei jeder Zahnradzahn (9) eine obere Fläche (19) aufweist, die eine Aussparung (20) aufweist, und wobei die Aussparungen (20) mittig in den Zahnradzähnen (9) angeordnet und so eingerichtet sind, dass sie mit einer Welle (14) der Schnecke (3) fluchten und diese aufnehmen.

8. Schneckenradanordnung (1), aufweisend das Globoid-Schneckenrad (4) nach einem der Ansprüche 1 bis 7, eine Schnecke (3) und ein Gehäuse (2), aufweisend eine Aussparung (6) zur Aufnahme des Globoid-Schneckenrads (4), wobei die Schnecke eine zweite Drehachse senkrecht zur ersten Drehachse aufweist und wobei das Globoid-Schneckenrad (4) und die Schnecke (3) an dem Gehäuse (2) zur Drehung um senkrechte Drehachsen und so montiert sind, dass die Schnecke (3) in Eingriff mit den Zahnradzähnen (9) des Globoid-Schneckenrads (4) steht.

9. Verfahren zum Zusammenbauen der Schneckenradanordnung (1) nach Anspruch 8, aufweisend das Montieren der Schnecke (3) am Gehäuse (2), sodass die Drehachsen senkrecht zueinander montiert sind, und anschließend das Montieren des Globoid-Schneckenrads (4) am Gehäuse (2), indem das Globoid-Schneckenrad (4) in axialer Richtung des Globoid-Schneckenrads (4) in die Aussparung (6) eingeführt wird.

## Revendications

1. Un engrenage à vis sans fin globoïde (4) destiné à venir en prise avec une vis sans fin (3) dans un ensemble d'engrenage à vis sans fin (1), l'engrenage à vis sans fin globoïde (4) comprenant :
une première surface latérale (17) et une deuxième surface latérale (18), une surface circonférentielle (10), et un premier axe de rotation ; et
une pluralité de dents d'engrenage (9) espacées autour de la surface circonférentielle (10) avec des espaces (11) agencés entre des dents d'engrenage adjacentes (9), la pluralité de dents d'engrenage (9) étant destinée à venir en prise avec la vis sans fin (3) ;
dans lequel la pluralité de dents d'engrenage (9) comprend des espaces (11) entre des dents d'engrenage adjacentes (9) qui débouchent dans la première surface latérale (17),
dans lequel l'extrémité avant (25) de la pluralité de dents d'engrenage (9) au niveau de la première surface latérale (17) comprend chacune un chanfrein (26) qui s'effile vers la première surface latérale (17),
**caractérisé en ce que** la surface circonférentielle (10) comprend au niveau de chacun des bords des espaces (11) au niveau de la première surface latérale (17)
un chanfrein (26) qui s'effile vers la première surface latérale (17) de l'engrenage à vis sans fin globoïde (4).

2. Engrenage à vis sans fin globoïde (4) selon la revendication 1, dans lequel chacune de la pluralité de dents d'engrenage (9) comprend des surfaces latérales concaves (22) pour venir en prise avec la vis sans fin (3).

3. Engrenage à vis sans fin globoïde (4) selon la revendication 1 ou la revendication 2, dans lequel les espaces (11) entre des dents d'engrenage adjacentes (9) s'étendent jusqu'à la deuxième surface latérale (18).

4. Engrenage à vis sans fin globoïde (4) selon la revendication 1 ou la revendication 2, dans lequel les espaces (11) entre des dents d'engrenage adjacentes (9) s'étendent uniquement jusqu'à la première surface latérale (17), la deuxième surface latérale (18) comprenant une bride (23) qui ferme les extrémités des espaces (11) entre des dents d'engrenage adjacentes (9).

5. Engrenage à vis sans fin globoïde (4) selon la revendication 4, dans lequel une surface de pied (24) est agencée entre chaque dent adjacente (9), la surface de pied (24) étant courbée dans une direction radiale vers l'extérieur de l'engrenage à vis sans fin globoïde (4) vers la bride (23).

6. Engrenage à vis sans fin globoïde (4) selon la revendication 4 ou la revendication 5, dans lequel chacune de la pluralité de dents d'engrenage (9) comprend une surface supérieure (19), dans lequel chaque surface supérieure (19) comprend une première partie (32) adjacente à la première surface latérale (17) et une deuxième partie (28) adjacente à la deuxième surface latérale (18), et dans lequel un rayon de la deuxième partie (28) par rapport au premier axe de rotation est supérieur à un rayon de la première partie (32) par rapport au premier axe de rotation.

7. Engrenage à vis sans fin globoïde (4) selon l'une quelconque des revendications 1 à 3, dans lequel chaque dent d'engrenage (9) a une surface supérieure (19) qui comprend un évidement (20) et dans lequel les évidements (20) sont agencés au centre dans les dents d'engrenage (9) et configurés pour s'aligner avec, et recevoir, un arbre (14) de la vis sans fin (3).

8. Ensemble d'engrenage à vis sans fin (1) comprenant l'engrenage à vis sans fin globoïde (4) selon l'une quelconque des revendications 1 à 7, une vis sans fin (3) et un logement (2) comprenant un évidement (6) recevant l'engrenage à vis sans fin globoïde (4), dans lequel la vis sans fin a un deuxième axe de rotation perpendiculaire au premier axe de rotation, et dans lequel l'engrenage à vis sans fin globoïde (4) et la vis sans fin (3) sont montés sur le logement (2) pour tourner autour d'axes de rotation perpendiculaires et de telle sorte que la vis sans fin (3) vient en prise avec les dents d'engrenage (9) de l'engrenage à vis sans fin globoïde (4).

9. Procédé d'assemblage de l'ensemble d'engrenage à vis sans fin (1) selon la revendication 8, comprenant le montage de la vis sans fin (3) sur le logement (2) pour monter les axes de rotation perpendiculairement, puis le montage de l'engrenage à vis sans fin globoïde (4) sur le logement (2) en insérant l'engrenage à vis sans fin globoïde (4) dans l'évidement (6) dans une direction axiale de l'engrenage à vis sans fin globoïde (4).
